# EUROPÄISCHE PATENTSCHRIFT

(11) **EP 2 309 903 B1**
(45) Veröffentlichungstag und Bekanntmachung des Hinweises auf die Patenterteilung: **02.07.2014**
(21) Anmeldenummer: 09781186.3
(22) Anmeldetag: 28.07.2009
(51) Int. Cl.: A47J 43/07

(54) **WERKZEUG UND KÜCHENGERÄT, INSBESONDERE STABMIXER**
TOOL AND KITCHEN APPLIANCE, IN PARTICULAR ROD MIXER
ACCESSOIRE ET USTENSILE DE CUISINE, EN PARTICULIER MIXEUR PLONGEUR

(30) Priorität: 01.08.2008 DE 102008040932
(43) Veröffentlichungstag der Anmeldung: 20.04.2011
(73) Patentinhaber: BSH Bosch und Siemens Hausgeräte GmbH, 81739 München (DE)
(72) Erfinder: CATER, Matej, 3301 Petrovce (SI); GOLAVSEK, Samo, 3312 Prebold (SI); SEMEJA, Uros, 3327 Smartno ob Paki (SI); DANIJEL, Roman, 3312 Ljubno (SI)
(86) Internationale Anmeldenummer: PCT/EP2009/059738
(87) Internationale Veröffentlichungsnummer: WO 2010/012728

(56) Entgegenhaltungen:
- DE-A1- 19 812 541

## Beschreibung

### Hintergrund der Erfindung

Die Erfindung betrifft ein Werkzeug für ein Küchengerät, insbesondere einen Stabmixer, mit einem glockenförmigen Fußteil, in dem ein Messer drehbar angeordnet ist und welches insbesondere im Bereich einer unteren Axialringfläche mit axial auskragenden Vorsprüngen versehen ist. Die Erfindung betrifft ferner ein damit ausgestattetes Küchengerät, insbesondere einen Stabmixer.

### Stand der Technik

Ein Werkzeug der eingangs genannten Art zur Verwendung an einem Stabmixer ist aus der europäischen Patentschrift EP 1 529 471 B1 bekannt. Das Werkzeug besteht aus einem an einen Schaft anformten Fußteil, welches sich glockenförmig aufweitet und zur Aufnahme eines drehbaren Messers vorgesehen ist. Das Messer wird durch eine im Schaft verlaufende Antriebswelle in Drehung versetzt. Das Werkzeug ist lösbar ausgebildet und kann durch Aufsetzen auf das Gehäuse des Stabmixers mit dem in dessen Gehäuse befindlichen elektrischen Antrieb gekoppelt werden.

Das glockenförmige Fußteil bildet an seinem unteren Ende eine Axialringfläche mit daran ansetzenden Vorsprüngen aus, welche in axialer Richtung wellenförmig auskragen. Im Bereich jeder Welle ist eine bogenförmige Ausnehmung vorgesehen, welche während des Mixens ein Zirkulieren des Bearbeitungsguts ermöglichen sollen.

Ein weiteres gattüngsgemäßes Werkzeug offenbart die europäische Patentschrift EP 0 925 010 B1. Das glockenförmige Fußteil bildet mit ihren axial angeformten Vorsprüngen eine leicht konisch geformte Mantelfläche aus, die nach oben hin durch eine näherungsweise ebene Abschlussfläche begrenzt wird und sich an ihrem unteren Ende im Bereich der Vorsprünge kragenartig nach außen auswölbt. Die innere Mantelfläche des Fußteils ist, einschließlich der von den Vorsprüngen gebildeten Flächenbereiche, durchgängig kreisbogenförmig konkav ausgebildet.

Ein anderes Werkzeug zur Verwendung an einem Stabmixer wird in der Offenlegungsschrift DE 198 12 541 A1 beschrieben. Das glockenförmige Fußteil dieses Werkzeugs ist nicht nur in axialer Richtung mit wellenartig hervorragenden Vorsprüngen versehen, sondern im unteren Teil seiner Mantelfläche auch in radialer Richtung wellenartig geformt. Der Querschnitt der Vorsprünge ist dabei, von innen betrachtet, durchgehend konvex gekrümmt ausgebildet, während die Glocke des Fußteils in den an die Vorsprünge in Umfangsrichtung angrenzenden Bereichen konkave Vorwölbungen aufweist. Beim Betreiben des Werkzeugs wird das Bearbeitungsgut von den gegebenenfalls auf dem Boden eines Rührgefäßes aufliegenden Vorsprüngen radial nach innen gelenkt, vom rotierenden Messer erfasst und durch die zwischen den Vorsprüngen befindlichen freien Querschnitte aus der Glocke herausgetrieben.

Bei dem aus der deutschen Patentschrift DE 43 21 653 C2 bekannten Werkzeug ist das glockenförmige Fußteil an seinem axialen Ende mit Vorsprüngen ausgestattet, die in ihrer Form und Anordnung näherungsweise den Leitschaufeln einer Radialturbine entsprechen. Das vom rotierenden Messer infolge Zentrifugalkraft schräg nach außen getriebene Bearbeitungsgut trifft auf die konkave Wölbung der Vorsprünge auf und wird in eine radiale Bewegung umgelenkt. In der deutschen Auslegeschrift DE 1 031 483 wird ein ähnliches Werkzeug beschrieben, bei welchem die leitschaufelartigen Vorsprünge jedoch nicht gewölbt, sondern eben ausgebildet sind.

Die Patentschrift US 5,368,384 betrifft ein Werkzeug für einen Stabmixer, bei welchem das glockenförmige Fußteil im Wesentlichen aus einem aufsetzbaren Ring mit zylindrischer Mantelfläche besteht, welcher keinerlei Vorsprünge, sondern nur in den Ring eingelassene, in Umfangsrichtung verlaufende Schlitze aufweist.

Alle diese vorbekannten Ausführungen sind hinsichtlich des Bearbeitungsergebnisses noch verbesserungsfähig. Darüber hinaus entstehen beim Betreiben des Küchengeräts nicht unerhebliche Axialkräfte, die das Werkzeug nach oben treiben und aufgefangen werden müssen. Insbesondere bei Verwendung an einem Stabmixer hat letzteres in oft unkomfortabler Weise durch die Hand desjenigen zu erfolgen, der das Gerät bedient.

### Der Erfindung zugrundeliegende Aufgabe

Der Erfindung liegt die Aufgabe zugrunde, ein gattungsgemäßes Werkzeug hinsichtlich des Bearbeitungsergebnisses, insbesondere beim Mixen, zu verbessern und die im Betrieb auftretenden, in axialer Richtung wirkenden Kräfte zu verringern.

### Erfindungsgemäße Lösung

Die der Erfindung zugrunde liegende Aufgabe wird durch ein Werkzeug wie in Anspruch 1 gelöst.

Mit dieser Ausbildung kann dadurch eine besonders gute Zubereitung des Bearbeitungsguts beim Mixen erzielt werden, dass das vom Messer innerhalb des Fußteils in Drehbewegung versetzte Bearbeitungsgut auf die Auswölbung auftritt und infolge dessen verzögert wird und/oder seine Drehrichtung örtlich ändert. Dies kann einen besonders guten Mixeffekt bewirken. Die Axialkräfte beim Betreiben des Werkzeugs können ferner durch Anwendung der Erfindung auf ein nicht mehr störendes Maß reduziert werden. Darüber hinaus kann ein Werkzeug mit einem derartigen Fußteil durch Spritzgießen von Kunststoff kostengünstig und mit niedrigem Gewicht gefertigt werden.

Der erfindungsgemäßen Auswölbung ist in der außenliegenden Mantelfläche des Vorsprungs vorzugsweise eine Einwölbung zugeordnet, so dass der Vorsprung zur Reduzierung von Materialeinsatz und Gewicht, sowie zur Verringerung der Zykluszeiten beim Spritzgießen an jedem Ort eine näherungsweise gleiche Wanddicke aufweist. Grundsätzlich kann die äußere Mantelfläche der Vorsprünge jedoch auch eine ausschließlich zylindrische oder beliebige andere Gestalt aufweisen.

Das erfindungsgemäße Werkzeug kann vorteilhaft mit einem motorischen, besonders vorteilhaft mit einem elektromotorischen Küchengerät eingesetzt. werden. Dabei kann das Messer von dem Motor rotierend angetrieben werden. Ein bevorzugtes Küchengerät ist ein Mixer, besonders vorzugsweise ein Handmixer, z.B. ein Stabmixer.

### Bevorzugte Ausgestaltung der Erfindung

Vorteilhafte Aus- oder Weiterbildungen, welche einzeln oder in Kombination miteinander eingesetzt werden können, sind Gegenstand der abhängigen Ansprüche.

Mit Vorteil beträgt der Radius des glockenförmigen Fußteils, insbesondere der innere Radius R seiner unteren Axialringfläche, 25 mm bis 35 mm, insbesondere etwa 30 mm. Ein Fußteil dieser Größe kann ein relativ geringes Gewicht aufweisen und auch in schlanken Rührgefäßen problemlos einsetzbar sein. Dennoch kann ein ausreichend dimensioniertes Messer in dem Fußteil angeordnet werden, so dass ein gutes Bearbeitungsergebnis in angemessener Zeit erzielt werden kann.

Die weisen Vorsprünge beiderseits der Auswölbungen jeweils einen als Kreisringsegment ausgebildeten Querschnitt auf, dessen Mittelpunkt diesseits des zugeordneten Vorsprungs angeordnet ist. Von innen betrachten sind die Vorsprünge also konkav geformt, wobei der Mittelpunkt des Kreisringsegments mit der Drehachse des Messers zusammenfällt. Fertigungstechnisch besonders günstig ist eine Ausbildung, bei welcher dieser Querschnitt als Verlängerung der Axialringfläche des Fußteils ausgebildet ist.

Der betreffende Querschnitt der Vorsprünge bildet vorzugsweise axial oben ein Kreisringsegment mit einem Winkel von 60° bis 80°, insbesondere etwa 70°, aus. Dabei kann vorgesehen werden, dass der Winkel des Kreisringsegments von oben nach unten abnehmend ausgeführt ist. Axial unten bildet der Querschnitt mit Vorteil ein Kreisringsegment mit einem Winkel von 30° bis 60°, insbesondere etwa 45°, aus. Derart geformte Vorsprünge können mechanisch ausreichend stabil und hinsichtlich einer Reinigung des Werkzeugs vorteilhaft sein. Der untere Abschluss der Vorsprünge ist zum Aufsetzen auf den Boden einer Rührschüssel mit Vorteil plan ausgeführt.

Nach einer besonders bevorzugten Ausbildung der Erfindung ist vorgesehen, dass jeder Vorsprung genau eine Auswölbung aufweist, die vorzugsweise in Umfangsrichtung mittig im Vorsprung angeordnet ist. Grundsätzlich können die Auswölbungen eine beliebige Gestalt aufweisen und beispielsweise einen vom Vorsprung in das Fußteil ragenden Steg ausbilden. Als besonders wirkungsvoll haben sich jedoch Auswölbungen erwiesen, die jeweils eine kreisförmige Kontur aufweisen, deren Mittelpunkt jenseits des zugeordneten Vorsprungs angeordnet ist. Von Inneren des Fußteils aus betrachtet ist die Wandung des Vorsprungs im Bereich der Auswölbung also konvex geformt. Dabei entspricht der größte, auf die innere Mantelfläche des Vorsprungs bezogene Radius r der Auswölbung dem 0,1fachen bis 0,3fachen, insbesondere etwa dem 0,2fachen des Radius R des Fußteils beziehungsweise seiner Axialringfläche. Der Querschnitt der Auswölbung bildet mit Vorteil endseitig näherungsweise einen Halbkreisring aus, dessen Mittelpunkt auf der Verlängerung der Axialringfläche des Fußteils angeordnet ist. Eine derartige Dimensionierung verleiht den Auswölbungen eine ausreichende Wirkung, schränkt den radialen Freiraum innerhalb des glockenförmigen Fußteils jedoch nur geringfügig ein, so dass ein relativ großes Messer eingesetzt werden kann.

Es ist erreichbar, dass das vom Messer in Bewegung versetzte Bearbeitungsgut bei der Bearbeitung zunächst an der inneren, konkav geformten Mantelfläche des betreffenden Vorsprungs entlanggleitet und dann auf die in innerer Ansicht vorzugsweise konvexe Auswölbung trifft, welche das Bearbeitungsgut verzögert und einen in Gegenrichtung drehenden Wirbel ausbildet. Nachdem das Messer im Bereich dieses Wirbels erneut in das Bearbeitungsgut eindringt, wird dieses stromab der Auswölbung wieder an die innere konkave Mantelfläche des Vorsprungs gepresst und tritt in dem an den betreffenden Vorsprung angrenzenden Freiraum aus dem glockenförmigen Fußteil aus.

Nach einer weiteren bevorzugten Ausbildung der Erfindung ist vorgesehen, dass die radiale Tiefe der Auswölbungen von oben nach unten gleichförmig ausgebildet ist. Hierdurch ist eine besonders gute Leitwirkung erzielbar. Alternativ kann vorgesehen werden, dass die radiale Tiefe der Auswölbungen von oben nach unten zunehmend ausgebildet ist, wodurch das Fußteil leichter zu reinigen ist. Die Führung des Bearbeitungsguts und die Reinigung des Werkzeugs werden ferner dadurch verbessert, dass die Auswölbungen bogenförmig in die angrenzenden Bereiche der zugeordneten Vorsprünge einlaufen.

Bei einem Werkzeug mit den genannten Merkmalen sind vorzugsweise drei Vorsprünge gleichmäßig über den Umfang des Fußteils beziehungsweise seiner Axialringfläche verteilt angeordnet. Dies bewirkt ausreichend großzügige Freiräume zwischen den Vorsprüngen, durch welche das Bearbeitungsgut aus dem Fußteil austreten kann. Darüber hinaus kann ein Stabmixer mit einem solchen Fußteil auch in einem schlanken Rührgefäß in einer relativ stark geneigten Stellung betrieben werden, wobei jeweils zwei Vorsprünge mit ihren zueinander weisenden Kanten auf dem Boden des Rührgefäßes aufsitzen. Dies ist insbesondere in der Initialphase des Mixens von großstückigem Bearbeitungsgut von Vorteil.

### Kurzbeschreibung der Figuren

Die Erfindung wird im Folgenden anhand schematischer Zeichnungen an zwei Ausführungsbeispielen mit weiteren Einzelheiten näher erläutert.

Es zeigen:
- Fig. 1:: ein erstes erfindungsgemäß ausgebildetes Werkzeug in perspektivischer Ansicht;
- Fig. 2:: das Werkzeug nach Fig. 1 in Ansicht von unten (Fig. 2a) und in teilweise geschnittener seitlicher Ansicht (Fig. 2b);
- Fig. 3:: eine perspektivischer Ansicht eines erfindungsgemäßen Werkzeugs nach einer anderen Ausführung der Erfindung;
- Fig. 4:: das in Fig. 3 gezeigte Werkzeug in Ansicht von unten (Fig. 4a) und in teilweise geschnittener seitlicher Ansicht (Fig. 4b).

### Ausführliche Beschreibung der Erfindung anhand zweier Ausführungsbeispiele

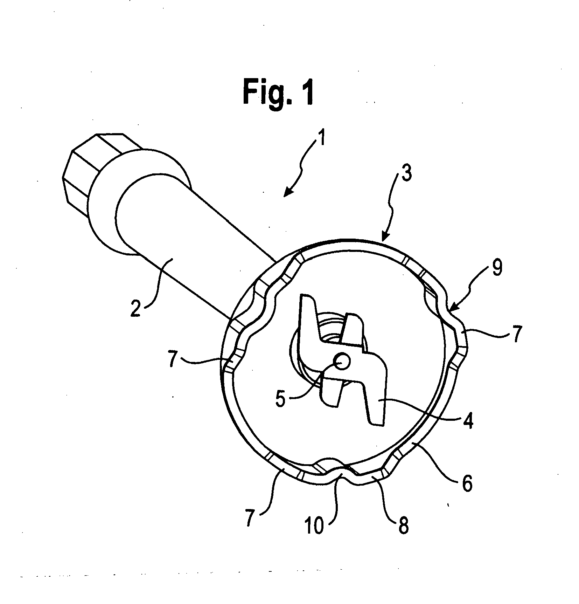

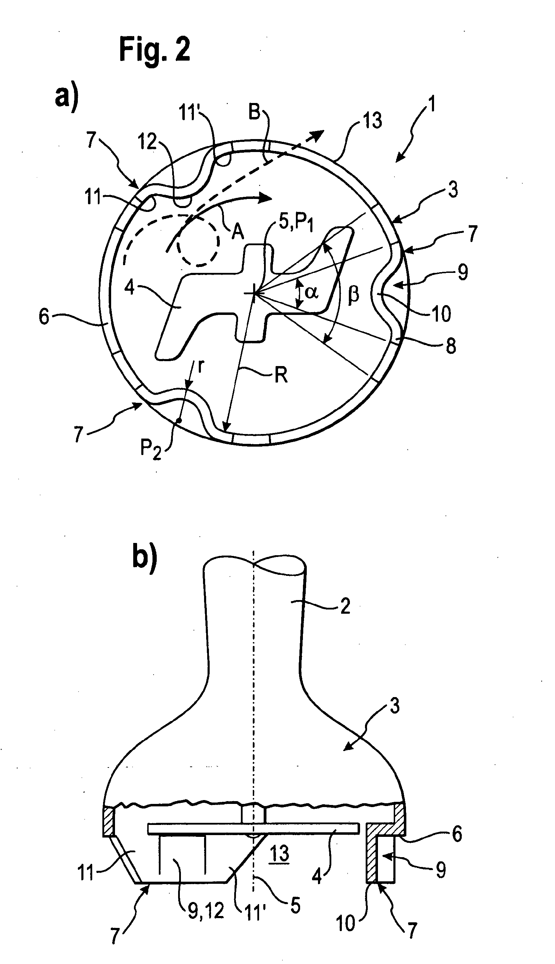

Das in den Fig. 1 und 2 dargestellte, zum Anbau an das Gehäuse eines Stabmixers vorgesehene Werkzeug 1 besteht aus einem an das Gehäuse kuppelbaren Schaft 2, der an seinem gehäusefernen Ende mit einem sich nach unten hin glockenförmig erweiternden Fußteil 3 versehen ist. Im unteren Bereich des Fußteils 3 ist ein Messer 4 um eine Drehachse 5 in Richtung des Pfeils A drehbar angeordnet, welches mittels einer koaxial im Schaft 2 verlaufenden Welle mit dem im Gehäuse des Stabmixers befindlichen elektrischen Antrieb drehverbindbar ist.

Alle Richtungs- und Ortsangaben beziehen sich auf die übliche Betriebslage des Werkzeugs 1, bei welcher die Drehachse 5 des Messers 4 vertikal ausgerichtet ist.

An seinem unteren Ende bildet das Fußteil 3 eine Axialringfläche 6 aus, aus welcher in Verlängerung dieser Axialringfläche 6 drei gleichmäßig über deren Umfang verteilt anordnete Vorsprünge 7 auskragen. Der Radius R der Axialringfläche 6 findet somit in den Vorsprüngen 7 partiell seine Fortsetzung, wobei der diesseits der Vorsprünge 7 angeordnete Mittelpunkt P₁ der Axialringfläche 6 mit der Drehachse 5 des Messers 4 zusammenfällt. Der näherungsweise ein Kreisringsegment 8 bildende Querschnitt eines jeden Vorsprungs 7 verändert sich dabei in axialer Richtung, wobei sich das Kreisringsegment 8 im Bereich der Axialringfläche 6 über einen Winkel α von 70° erstreckt und zum unteren Ende des Fußteils 3 hin auf einen Winkel β von 45° verjüngt.

Das Messer 4 ist näherungsweise in der Höhe der Axialringfläche 6 angeordnet und wird von den Vorsprüngen 7 nach unten überragt.

Jeder dieser Vorsprünge 7 ist mittig mit einer Auswölbung 9 versehen, die ihrerseits einen Querschnitt in Form des Segments 10 eines Kreisrings, nämlich eines Halbkreises mit dem auf die innere Mantelfläche des Vorsprungs 7 bezogenen Radius r, ausbildet. Der Mittelpunkt P₂ dieses Segments 10 befindet sich jenseits der Vorsprünge 7, also außerhalb des von der Mantelfläche des Fußteils 3 umgebenen Raumes, und ist im Bereich der Axialringfläche 6 angeordnet. Der Radius r und damit auch die radiale Tiefe jeder Auswölbung 9 sind in axialer Richtung gleichbleibend ausgebildet, so dass die Auswölbungen 9 von oben nach unten einen gleichbleibenden Querschnitt aufweisen. Hierdurch wird der Leiteffekt der Auswölbungen 9 über eine axial große Erstreckung aufrecht erhalten.

Bei Rotation des Messers 4 gleitet das Bearbeitungsgut zunächst an der inneren, konkav geformten Mantelfläche 11 jedes betreffenden Vorsprungs 7 entlang. Nachfolgend trifft es dann auf die in innerer Ansicht konvex geformte Wandung 12 der Auswölbung 9, welche das sich in Richtung des Pfeils A mitdrehende Bearbeitungsgut randseitig verzögert und einen in Gegenrichtung drehenden Wirbel ausbildet. Nachdem das Messer 4 im Bereich dieses Wirbels erneut in das Bearbeitungsgut eindringt, wird dieses stromab der Aufwölbung 9 wieder an die innere konkave Mantelfläche 11' des betreffenden Vorsprungs 7 gepresst. Im Anschluss daran tritt ein Teil des Bearbeitungsguts in dem angrenzenden Freiraum 13 aus dem glockenförmigen Fußteil 3 aus. Darüber hinaus beschränken die Auswölbungen beim Betreiben des Stabmixers ein Mitdrehen des Bearbeitungsguts innerhalb des Fußteils 3 und bewirken damit eine verstärkte Relativbewegung zwischen Messer 4 und Bearbeitungsgut.

Ein möglicher Bewegungspfad des Bearbeitungsguts ist in Fig. 2a mit dem Pfeil B gekennzeichnet.

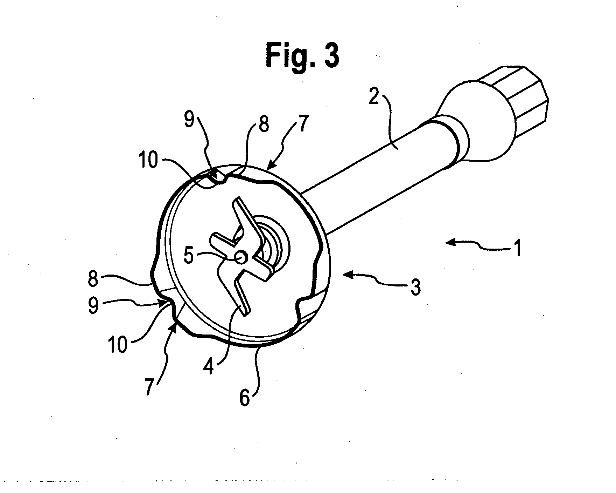

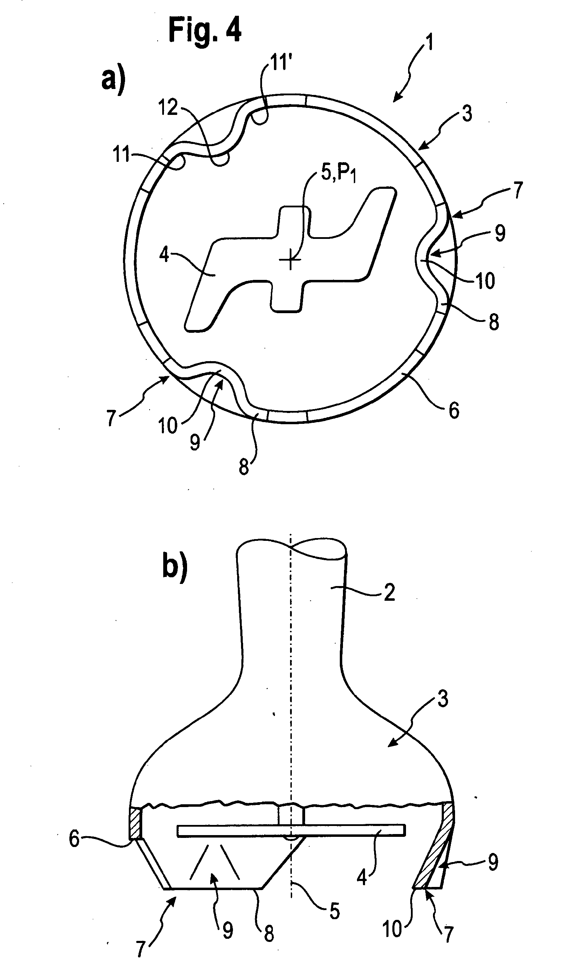

Die Ausführung nach Fig. 3 und 4 entspricht im Wesentlichen dem zuvor beschriebenen Werkzeug 1. Die Auswölbungen 9 sind jedoch mit einem sich nach unten vergrößernden Radius r versehen, wodurch auch die radiale Tiefe der Auswölbungen 9 nach unten hin zunimmt. Durch diese Ausbildung werden scharfkantige Hinterschnitte im Bereich der Auswölbungen 9 vermieden und das Reinigungsverhalten des Werkzeugs 1 verbessert. Die in das Fußteil 3 hineinragende Fläche der Auswölbungen 9 verringert sich durch diese Ausbildung, wodurch eine geringfügige und für die Ausführung der Erfindung in der Regel unwesentliche Abschwächung der Leitwirkung auftritt.

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausgestaltungen von Bedeutung sein.

### Bezugszeichen

- 1: Werkzeug
- 2: Schaft
- 3: Fußteil
- 4: Messer
- 5: Drehachse
- 6: Axialringfläche
- 7: Vorsprung
- 8: Kreisringsegment
- 9: Auswölbung
- 10: Segment (eines Kreisrings)
- 11, 11': Mantelfläche
- 12: Wandung
- 13: Freiraum

- A: Pfeil (Drehrichtung des Messers)
- B: Bewegungspfad
- P₁: Mittelpunkt (der Axialringfläche 6 bzw. des Kreisringsegments 8)
- P₂: Mittelpunkt (der Auswölbung 9)
- R: Radius (der Axialringfläche 6 bzw. des Kreisringsegments 8)
- r: Radius (der Auswölbung 9)

## Patentansprüche

1. Werkzeug (1) für ein Küchengerät mit einem glockenförmigen Fußteil (3), in dem ein Messer (4) drehbar angeordnet ist und welches insbesondere im Bereich einer unteren Axialringfläche (6) mit axial auskragenden Vorsprüngen (7) versehen ist, die mindestens eine radial nach innen ragende Auswölbung (9) aufweisen, **dadurch gekennzeichnet, dass** die Vorsprünge (7) beiderseits der Auswölbungen (9) jeweils einen als Kreisringsegment (8) ausgebildeten Querschnitt aufweisen, dessen Mittelpunkt (P₁) mit der Drehachse (5) des Messers (4) zusammenfällt.

2. Werkzeug nach Anspruch 1, **dadurch gekennzeichnet, dass** der Radius (R) des Fußteils, insbesondere der Axialringfläche (6), 25 mm bis 35 mm, insbesondere etwa 30 mm beträgt.

3. Werkzeug nach Anspruch 1 oder 2, **dadurch gekennzeichnet, dass** der Querschnitt als Verlängerung der Axialringfläche (6) des Fußteils (3) ausgebildet ist.

4. Werkzeug nach Anspruch 3, **dadurch gekennzeichnet, dass** der Querschnitt axial oben ein Kreisringsegment (8) mit einem Winkel (β) von 60° bis 80°, insbesondere etwa 70°, ausbildet.

5. Werkzeug nach Anspruch 3 oder 4, **dadurch gekennzeichnet, dass** der Winkel (α, β) des Kreisringsegments (8) von oben nach unten abnehmend ausgeführt ist.

6. Werkzeug nach Anspruch 3 bis 5, **dadurch gekennzeichnet, dass** der Querschnitt axial unten ein Kreisringsegment (8) mit einem Winkel (β) von 30° bis 60°, insbesondere etwa 45°, ausbildet.

7. Werkzeug nach einem der vorhergehenden Ansprüche, **dadurch gekennzeichnet, dass** jeder Vorsprung (7) eine Auswölbung (9) aufweist.

8. Werkzeug nach Anspruch 7, **dadurch gekennzeichnet, dass** die Auswölbung (9) in Umfangsrichtung mittig im Vorsprung (7) angeordnet ist.

9. Werkzeug nach einem der vorgehenden Ansprüche, **dadurch gekennzeichnet, dass** die Auswölbungen (9) jeweils eine kreisförmige Kontur aufweisen, deren Mittelpunkt (P₂) jenseits des zugeordneten Vorsprungs (7) angeordnet ist.

10. Werkzeug nach Anspruch 9, **dadurch gekennzeichnet, dass** der größte, auf die innere Mantelfläche des Vorsprungs (7) bezogene Radius (r) der Auswölbung (9) dem 0,1fachen bis 0,3fachen, insbesondere etwa dem 0,2fachen des Radius (R) des Fußteils (3) oder der Axialringfläche (6) entspricht.

11. Werkzeug nach Anspruch 9 oder 10, **dadurch gekennzeichnet, dass** der Querschnitt der Auswölbung endseitig näherungsweise einen Halbkreisring ausbildet, dessen Mittelpunkt (P₂) auf der Verlängerung der Axialringfläche (6) des Fußteils (3) angeordnet ist.

12. Werkzeug nach einem der vorhergehenden Ansprüche, **dadurch gekennzeichnet, dass** die radiale Tiefe der Auswölbungen (9) von oben nach unten gleichförmig ausgebildet ist.

13. Werkzeug nach einem der Ansprüche 1 bis 11, **dadurch gekennzeichnet, dass** die radiale Tiefe der Auswölbungen (9) von oben nach unten zunehmend ausgebildet ist.

14. Werkzeug nach einem der vorgehenden Ansprüche, **dadurch gekennzeichnet, dass** die Auswölbungen (9) bogenförmig in die angrenzenden Bereiche der zugeordneten Vorsprünge (7) einlaufen.

15. Küchengerät mit einem Werkzeug (1) nach einem der vorhergehenden Ansprüche.

## Claims

1. Tool (1) for a kitchen appliance with a bell-shaped base section (3), in which a blade (4) is rotatably disposed and which, especially in the area of a lower axial ring surface (6), is provided with axially overhanging projections (7), which have at least one bulge (9) projecting radially inwards, **characterised in that** the projections (7) on both sides of the bulges (9) each have a cross section embodied as a circle segment (8), the centre point (P₁) of which coincides with the axis of rotation (5) of the blade (4).

2. Tool according to claim 1, **characterised in that** the radius (R) of the base section, especially of the axial ring surface (6), amounts to 25 mm to 35 mm, especially to around 30 mm.

3. Tool according to claim 1 or 2, **characterised in that** the cross section is embodied as an extension of the axial ring surface (6) of the base section (3).

4. Tool according to claim 3, **characterised in that** the cross section axially upwards embodies a circle segment (8) with an angle (β) of 60° to 80°, especially around 70°.

5. Tool according to claim 3 or 4, **characterised in that** the angle (α, β) of the circle segment (8) is designed to decrease from top to bottom.

6. Tool according to claim 3 to 5, **characterised in that** the cross section axially downwards embodies a circle segment (8) with an angle (β) of 30° to 60°, especially around 45°.

7. Tool according to one of the preceding claims, **characterised in that** each projection (7) has a bulge (9).

8. Tool according to claim 7, **characterised in that** the bulge (9) is disposed in the circumferential direction in the centre of the projection (7).

9. Tool according to one of the preceding claims, **characterised in that** the bulges (9) each have a circular contour, of which the central point (P₂) is disposed on the other side of the assigned projection (7).

10. Tool according to claim 9, **characterised in that** the largest radius (r) of the bulge (9) relative to the inside outer surface of the projection (7) corresponds to one tenth to three tenths, especially around two tenths, of the radius (R) of the base section (3) or the axial ring surface (6).

11. Tool according to claim 9 or 10, **characterised in that** the cross section of the bulge on the end side embodies an approximate semicircle, the centre point (P₂) of which is disposed on the extension of the axial ring surface (6) of the base section (3).

12. Tool according to one of the preceding claims, **characterised in that** the radial depth of the bulges (9) is embodied in the same shape from top to bottom.

13. Tool according to one of claims 1 to 11, **characterised in that** the radial depth of the bulges (9) is embodied to increase from top to bottom.

14. Tool according to one of the preceding claims, **characterised in that** the bulges (9) run in a curved shape into the adjoining areas of the assigned projections (7).

15. Kitchen appliance with a tool (1) according to one of the preceding claims.

## Revendications

1. Outil (1) pour un appareil de cuisine, comprenant une partie de pied (3) en forme de cloche, dans laquelle une lame (4) est disposée de manière rotative et laquelle, notamment dans la zone d'une surface annulaire axiale (6) inférieure, est munie de saillies (7) débordant axialement, lesquelles présentent au moins une courbure (9) dépassant radialement vers l'intérieur, **caractérisé en ce que** les saillies (7) présentent de chaque côté des courbures (9) respectivement une section transversale réalisée comme segment d'anneau de cercle (8) dont le point central (P₁) coïncide avec l'axe de rotation (5) de la lame (4).

2. Outil selon la revendication 1, **caractérisé en ce que** le rayon (R) de la partie de pied, notamment de la surface annulaire axiale (6), est de 25 mm à 35 mm, notamment d'environ 30 mm.

3. Outil selon la revendication 1 ou 2, **caractérisé en ce que** la section transversale est réalisée comme prolongement de la surface annulaire axiale (6) de la partie de pied (3).

4. Outil selon la revendication 3, **caractérisé en ce que** la section transversale forme axialement en haut un segment d'anneau de cercle (8) ayant un angle (β) de 60° à 80°, notamment d'environ 70°.

5. Outil selon la revendication 3 ou 4, **caractérisé en ce que** l'angle (α, β) du segment d'anneau de cercle (8) est réalisé en décroissant du haut vers le bas.

6. Outil selon les revendications 3 à 5, **caractérisé en ce que** la section transversale forme axialement en bas un segment d'anneau de cercle (8) ayant un angle (β) de 30° à 60°, notamment d'environ 45°.

7. Outil selon l'une quelconque des revendications précédentes, **caractérisé en ce que** chaque saillie (7) présente une courbure (9).

8. Outil selon la revendication 7, **caractérisé en ce que** la courbure (9) est disposée au milieu dans la saillie (7) dans le sens circonférentiel.

9. Outil selon l'une quelconque des revendications précédentes, **caractérisé en ce que** les courbures (9) présentent respectivement un contour circulaire dont le point central (P₂) est disposé au-delà de la saillie correspondante (7).

10. Outil selon la revendication 9, **caractérisé en ce que** le plus grand rayon (r) de la courbure (9), par rapport à la surface d'enveloppe intérieure de la saillie (7), correspond de 0,1 fois à 0,3 fois, notamment à environ 0,2 fois, du rayon (R) de la partie de pied (3) ou de la surface annulaire axiale (6).

11. Outil selon la revendication 9 ou 10, **caractérisé en ce que** la section transversale de la courbure forme approximativement un demi-anneau de cercle du côté terminal, dont le point central (P₂) est disposé sur le prolongement de la surface annulaire axiale (6) de la partie de pied (3).

12. Outil selon l'une quelconque des revendications précédentes, **caractérisé en ce que** la profondeur radiale des courbures (9) est réalisée de manière uniforme du haut vers le bas.

13. Outil selon l'une quelconque des revendications 1 à 11, **caractérisé en ce que** la profondeur radiale des courbures (9) est formée en croissant du haut vers le bas.

14. Outil selon l'une quelconque des revendications précédentes, **caractérisé en ce que** les courbures (9) aboutissent en forme d'arc dans les zones adjacentes des saillies correspondantes (7).

15. Appareil de cuisine comprenant un outil (1) selon l'une quelconque des revendications précédentes.
